# EUROPÄISCHE PATENTSCHRIFT

(11) **EP 2 240 531 B1**
(45) Veröffentlichungstag und Bekanntmachung des Hinweises auf die Patenterteilung: **08.08.2012**
(21) Anmeldenummer: 09708070.9
(22) Anmeldetag: 06.02.2009
(51) Int. Cl.: C08G 63/00, C09K 8/00

(54) **VERNETZTE GLYCERIN- ODER OLIGOGLYCERINESTER UND DEREN VERWENDUNG ALS ADDITIV IN BOHRSPÜLUNGEN**
CROSSLINKED GLYCEROL OR OLIGOGLYCEROL ESTERS, AND USE THEREOF AS AN ADDITIVE IN DRILLING FLUIDS
ESTERS DE GLYCÉRINE OU D'OLIGOGLYCÉRINE RÉTICULÉS ET LEUR UTILISATION COMME ADDITIFS DANS DES AGENTS DE NETTOYAGE DE FORAGE

(30) Priorität: 08.02.2008 DE 102008008251
(43) Veröffentlichungstag der Anmeldung: 20.10.2010
(73) Patentinhaber: Emery Oleochemicals GmbH, 40589 Düsseldorf (DE)
(72) Erfinder: MÜLLER, Heinz, 40789 Monheim (DE); MÄKER, Diana, 40789 Monheim (DE); HERZOG, Nadja, 41352 Korschenbroich (DE); WESTFECHTEL, Alfred, 40724 Hilden (DE)
(74) Vertreter: Kinkeldey, Daniela
(86) Internationale Anmeldenummer: PCT/EP2009/051401
(87) Internationale Veröffentlichungsnummer: WO 2009/098308

(56) Entgegenhaltungen:
- DE-A1-102004 042 738
- US-A1- 2004 248 746
- DATABASE WPI Week 200767 Thomson Scientific, London, GB; AN 2007-709882 XP002526158 & CN 1 966 561 A (SINOPEC YANGZI PETROCHEMICAL CO LTD) 23. Mai 2007 (2007-05-23)
- DATABASE WPI Week 200618 Thomson Scientific, London, GB; AN 2006-168490 XP002526159 & JP 2006 047656 A (RICOH KK) 16. Februar 2006 (2006-02-16)

## Beschreibung

Die vorliegende Erfindung betrifft einen vernetzten Glycerin- oder Oligoglycerinester, ein Verfahren zur Herstellung eines vernetzten Glycerin- oder Oligoglycerinesters, eine Zusammensetzung, beinhaltend einen solchen vernetzten Glycerin- oder Oligoglycerinester, die Verwendung einer solchen Zusammensetzung, ein Verfahren zum Herstellen von Bohrlöchern, ein Verfahren zur Herstellung eines Öls oder eines Gases sowie die Verwendung eines vernetzten Glycerin- oder Oligoglycerinesters.

Bohrlochbehandlungsmittel sind alle Arten von Hilfsflüssigkeiten, die bei der Erbohrung von Erdöl- oder Erdgas-Lagerstätten Einsatz finden können. Dabei kommt den so genannten Bohrspülflüssigkeiten und darauf aufgebauten Bohrspülschlämmen oder Bohrspülungen, die sowohl bei landgestützten als auch bei seegestützten Bohrungen Verwendung finden können, besondere Bedeutung zu. Bekannt sind einerseits wasserbasierte Bohrspülungen mit einem Gehalt an etwa 1 bis 50 % emulgierter Öl-Phase - neben den anderen üblichen Hilfsstoffen einer solchen Bohrspülung - die auch als O/W-Emulsionsspülungen (Öl-in-Wasser-Emulsion) bezeichnet werden. Auf der anderen Seite sind in breitem Umfang ölbasierte Spülungssysteme im praktischen Einsatz, bei denen das Öl die fließfähige Phase oder doch wenigstens einen substantiellen Anteil der fließfähigen Phase als geschlossene Öl-Phase bildet. Besondere Bedeutung haben hier die so genannten Invert-Bohrspülschlämme, die auf der Basis W/O-Emulsionen (Wasser-in-Öl-Emulsion) eine disperse, wässrige Phase in der geschlossenen Öl-Phase enthalten. Der Gehalt an disperser, wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die so genannten *true-oil-Muds* bekannt, deren Flüssigphase nahezu ausschließlich aus einer geschlossenen Öl-Phase gebildet ist, die allenfalls geringe Mengen - üblicherweise nicht mehr als etwa 5 bis 10 Gew.-% - an wässriger Phase dispergiert enthalten.

Die nicht-wässerige Phase derartiger Spülungssysteme wird durch das so genannte *Carrier-Fluid* gebildet. Es handelt sich dabei ursprünglich um Dieselöl, welches mit bestimmten Additiven versetzt die eigentliche Bohrspülung bildet. Mit Ende der achtziger Jahre kam aber der Bedarf nach umweltfreundlichen Spülungssystemen und somit umweltfreundlichen *Carrier-Fluids* auf. Diese sollten insbesondere besser biologisch abbaubar sein als das bislang eingesetzte Dieselöl.

Neben diversen flüssigen Estern, wie sie zum Beispiel in der EP-A-0 374 672 beschrieben werden, wurden auch olefinische Kohlenwasserstoffe und Paraffine auf ihre Brauchbarkeit hin untersucht. Verwiesen sei hier exemplarisch auf die EP-A-0 765 368, welche die Verwendung von so genannten α-Olefinen als *Carrier-Fluid* zum Gegenstand hat.

Bohrspülungen für den Erdreichaufschluss sind in der Praxis Dispersionen aus einer flüssigen und einer Feststoffphase, wobei bei den Bohrspülungen ein erheblicher Feststoffanteil vorliegt. Es handelt es sich dabei um flüssige Spülsysteme zur Niederbringung von Gesteinsbohrungen unter Aufbringen des abgelösten Bohrkleins. Daher ist es notwendig, dass die Bohrspülungen eine bestimmte Dichte haben (in der Regel größer als 1,2 g/cm³, vorzugsweise größer als 1,5 g/cm³), um ein eventuelles Einbrechen der Formation verhindern zu können. Zu diesem Zweck werden der Spülung Feststoffe zur Beschwerung zugesetzt. In der Regel wird Bariumsulfat verwendet. Derartige, Feststoffe enthaltende Flüssigkeiten zeigen in der Regel unter Scherbelastung ein thixotropes Verhalten, d. h. dass die Viskosität dieser auch als nicht-newtonsche Flüssigkeiten bezeichneten Systeme unter dem Einfluss zunehmender Schubspannung oder Schergeschwindigkeit abnimmt. Dieses Verhalten kann in der Praxis dann zu Problemen führen, wenn die Flüssigkeiten transportiert bzw. gepumpt werden sollen und dabei unterschiedlichen mechanischen Belastungen ausgesetzt werden.

Neben Verdickern beinhalten Bohrspülungen in der Regel auch Viskositätsveränderer, um das Vikositätsverhalten der Bohrspülungen für- den jeweiligen Anwendungsbereich zu optimieren, wobei aus dem Stand der Technik insbesondere der Einsatz von hydrophobierten Betoniten als Viskositätsmodifizierer in Bohrspülungen bekannt ist. Dabei ist zu beachten, dass es besonders bei tiefen Bohrungen auch aufgrund der dort henschenden recht hohen Temperaturen zur einer starken Verdickung und damit verringerten Pumpfähigkeit bei Bohrspülungen, welche solche hydrophobierten Betonite als Viskositätsmodifizierer beinhalten, kommen kann. Dieses wirkt sich unter anderem Nachteilig auf die Maschinerie, insbesondere auf die Pumpen und Laufzeiten aus. Weiterhin ist es ein Ziel, insbesondere bei sehr tiefen Bohrungen den Feststoffgehalt so gering wie möglich zu halten.

US 2004 248 746 A1 betrifft ein Schmieröl das für eine Hochgeschwindigkeitsluftturbine für den zahnärztlichen Gebrauch geeignet ist.

Der vorliegenden Erfindung lag die Aufgabe zugrunde, die sich aus dem Stand der Technik ergebenden Nachteile im Zusammenhang mit Bohrspülungen zu überwinden.

Insbesondere lag der vorliegenden Erfindung die Aufgabe zugrunde, ein möglichst flüssiges Additiv anzugeben, welches sich als Verdickungsmittel in Bohrspülungen, insbesondere in ölbasierten Bohrspülungen eignet, so dass gegebenenfalls auf feststoffartige Verdickungsmittel oder Viskositätsmodifizierer in Bohrspülungen verzichtet, zumindest aber deren Menge signifikant reduziert werden kann. Dabei sollte das Additiv nicht nur gute Verdickungsdgenschaften aufweisen, sondern sollte zudem in möglichst hohem Umfang biologisch abbaubar sein, so dass ein Einsatz einer Bohrflüssigkeit mit einem solchen Additiv auch aus ökologischer Sicht vorteilhaft ist. Auch sollte das Additiv der Bohrspülung eine verbesserte Schmierwirkung verleihen.

Darüber hinaus sollten sich die vorstehend beschriebenen, vorteilhaften Additive im Vergleich zu den aus dem Stand der Technik als Verdickungsmittel eingesetztten Additiven möglichst kostengünstig herstellen lassen.

Auch lag der vorliegenden Erfindung die Aufgabe zugrunde, eine Zusammensetzung anzugeben, welche sich als Bohrspülung eignet, wobei diese Zusammensetzung einen möglichst geringen Feststoffgehalt aufweisen sollte. Auch sollte sich diese Zusammensetzung in einem möglichst breiten Spektrum, insbesondere jedoch bei *onshore-* als auch bei *offshore*-Bohrungen, dort vor allem bei Tiefseebohrungen, als Bohrspülung einsetzen lassen. Darüber hinaus sollte sich die Bohrspülung durch ein vorteilhaftes, ökotoxikologisches Verhalten auszeichnen, in möglichst hohem Maße biologisch abbaubar sein und sich aus möglichst preiswerten Ausgangsmaterialien herstellen lassen.

Einen Beitrag zur Lösung der eingangs genannten Aufgaben leistet ein vernetzter Glycerin- oder Oligoglycerinester, welcher erhältlich ist, vorzugsweise erhalten wurde, durch Vernetzung eines nichtvernetzten Glycerin- oder Oligoglycerinesters, wobei der nichtvernetzte Glycerin- oder Oligoglycerinester erhältlich ist, vorzugsweise erhalten wurde, durch Umsetzung einer
(A) Säure-Phase beinhaltend eine
   (a1) eine Fettsäure, oder
   (a2) eine Dicarbonsäure, oder
   (a3) eine Dimerfettsäure, oder
   (a4) eine Oligomerfettsäure, oder
   (a5) eine Hydroxyfettsäure oder
   (a6) eine Mischung von mindestens zwei davon,
   mit einer
(B) Alkohol-Phase beinhaltend
   (b1) Monoglycerin, oder
   (b2) Diglycerin, oder
   (b3) Triglycerin, oder
   (b4) Oligoglycerin aus mehr als drei Glycerin-Einheiten, oder
   (b5) ein Alkoxylat der Glycerine (b1), (b2), (b3) oder (b4), oder
   (b6) eine Mischung aus mindestens zwei davon,
   unter Bildung eines Voll- oder Partialesters und Vernetzung des Voll- oder Partialesters mittels eines Vernetzers, wobei die Vernetzung während oder nach der Bildung des Voll- oder Partialesters erfolgen kann; wobei der Vernetzer eine Verbindung ist, welche mindestens zwei funktionelle Gruppen aufweist, die mit den freien OH-Gruppen des Voll- oder Partialesters unter Bildung einer kovalenten Bindung zu reagieren vermögen.

Der Begriff *"Partialester",* wie er hierin verwendet wird, beschreibt vorzugsweise einen Ester aus den Säuren der Säure-Phase (A) und den Alkoholen der Alkohol-Phase (B), wobei zumindest ein Teil der OH-Gruppen in den Mono-, Di-, Tri- oder Oligoglycerinen der Alkohol-Phase (B), beispielsweise mindestens 5 %, noch mehr bevorzugt mindestens 10 %, darüber hinaus bevorzugt mindestens 20 %, noch mehr bevorzugt mindestens 30 %, noch mehr bevorzugt mindestens 40 % und am meisten bevorzugt mindestens 50 % der ursprünglich in der Alkohol-Phase (B) vorhandenen OH-Gruppen nach der Veresterungsreaktion noch als OH-Gruppen vorliegen und mithin nicht verestert sind.

Demnach beschreibt der Begriff *"Vollester",* wie er hierin verwendet wird, vorzugsweise einen Ester aus den Sauren der Säure-Phase (A) und den Alkoholen der Alkohol-Phase (B), bei dem weniger als 10%, mehr bevorzugt weniger als 5 %, noch mehr bevorzugt weniger als 4 %, darüber hinaus bevorzugt weniger als 3 %, noch mehr bevorzugt weniger als 2 %, noch mehr bevorzugt weniger als 1 % und am meisten bevorzugt 0 % der ursprünglich in der Alkohol-Phase (B) vorhandenen OH-Gruppen nach der Veresterungsreaktion noch als OH-Gruppen vorliegen.

Der Begriff "*vernetzter Glycerin- oder Oligoglycerinester",* wie er hierin verwendet wird, beschreibt vorzugsweise einen Ester, welche auf Glycerin-, Di-, Tri- oder Oligoglycerin als Alkohol-Komponente basiert, wobei mindestens zwei der zumindest teilweise veresterten Alkohol-Moleküle oder aber zwei der veresterten Säure-Gruppen, vorzugsweise jedoch zwei der veresterten Alkhol-Gruppen über ein Vernetzungsmittel miteinander vernetzt sind.

Der erfindungsgemäße vernetzte Glycerin- oder Oligoglycerinester ist durch Vernetzung eines nichtvernetzten Glycerin- oder Oligoglycerinesters erhältlich, wobei dieser nichtvernetzte Glycerin- oder Oligoglycerinester seinerseits durch Umsetzung einer Säure-Phase (A) mit einer Alkohol-Phase (B) unter Bildung eines Voll- oder Partialesters erhältlich ist.

Die hierzu eingesetzte Säure-Phase beinhaltet vorzugsweise eine Fettsäure (a1), eine Dicarbonsäure (a2), eine Dimerfettsäure (a3), eine Oligomerfettsäure (a4), eine Hydroxyfettsäure (a5) oder eine Mischung von mindestens zwei dieser Säuren, wobei Fettsäuren (a1) und Hydroxyfettsäuren (a5) besonders bevorzugt und Fettsäuren (a1) am meisten bevorzugt sind.

Als Fettsäure (a1) kommen insbesondere die der allgemeinen Formel

R-COOH

in Betracht, in der R für einen gesättigten oder ungesättigten, verzweigten oder linearen Alkyl- oder Alkenylrest mit 7 bis 21 C-Atomen steht. In diesem Zusammenhang besonders bevorzugt sind Fettsäuren ausgewählt aus der Gruppe bestehend aus Capronsäure, Caprylsäure, 2-Ethylhexansäure, Caprinsäure, Laurinsäure, Isotridecansäure, Myristinsäure, Palmitinsäure, Palmoleinsäure, Stearinsäure, I-sostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren Mischungen, die z. B. technisch bedingt, bei der Druckspaltung von natürlichen Fetten und Ölen, bei der Reduktion von Aldehyden aus der Roelen'schen Oxosynthese anfallen. Bevorzugt sind technische Fettsäuren mit 12 bis 18 Kohlenstoffatomen, wie beispielsweise Kokos-, Palm-, Palmkern- oder Talgfettsäure.

Insbesondere bevorzugt ist es, dass die Fettsäure (a1) ausgewählt ist aus einfach oder mehrfach ungesättigten, verzweigten oder linearen, vorzugsweise aber linearen Monocarbonsäuren, wobei ungesättigte Vertreter, vorzugsweise die Ölsäure, auch in technischen Qualitäten, besonders bevorzugt sind. Besonders vorteilhaft kann es sein, eine Säure-Phase (A) bereitzustellen, die als Fettsäurekomponente (a1) ausschließlich lineare, ungesättigte Fettsäuren enthält.

Weiterhin denkbar als Fettsäure (a1) ist der Einsatz von Tallölfettsäuren. Tallölfettsäuren enthalten insbesondere Mischungen aus Linolsäure und konjugierten C₁₈-Fettsäuren (45-65 Gew.-%), Ölsäure (25-45 Gew.-%), Octadeca-5,9,12-triensäure (5-12 Gew.-%) und gesättigten Fettsäuren (1-3 Gew.-%).

Ebenfalls geeignete Säurekomponenten stellen die Dicarbonsäuren (a2) dar. Dabei handelt es sich um solche Carbonsäuren, die zwei -COOH-Funktionen im Molekül enthalten, wobei insbesondere die gesättigten Dicarbonsäuren bevorzugt sind. Die Dicarbonsäuren (a2) enthalten vorzugsweise zwischen 4 und 22 C-Atomen, insbesondere zwischen 6 und 18 C-Atomen. Beispielhaft seien genannt die Oxal-, Malon-, Bernstein-, Glutar-, Adipin-, Pimelin-, Suberin-, Azealain- bzw. die Sebacinsäure. Auch ungesättigte Dicarbonsäuren sind möglich, z. B. die Fumar- oder die Maleinsäuren. Die Dicarbonäuren der Gruppe (a2) umfassen nicht die Dimerfettsäuren gemäß der Gruppe (a3).

Dimerfettsäuren (a3) sind bei Raumtemperatur (21 °C) flüssige, oxidationsstabilisierte Dicarbonsäuren, die z. B. durch katalytische Dimerisierung ungesättigter Fettsäuren, z. B. der Ölsäure, Ricinenfettsäure oder der Tallölfettsäure unter Sauerstoff-Ausschluss gewonnen werden. Die Verknüpfung ergibt je nach verwendeter Fettsäure lineare, monocyclische oder aromatische Strukturen. Die Reaktion verläuft unter Isomerisierung isolierter Doppelbindungen überwiegend nach einer Addition vom Diels-Alder-Typ ab. Kommerziell erhältliche dimerisierte Fettsäuren werden destillativ aufgearbeitet und bestehen aus einem Gemisch, das z. B. neben geringen Anteilen linearer und verzweigter C₁₈-Monocarbonsäuren (Monomerfettsäure) überwiegend C₃₆-Dicarbonsäuren und je nach Aufwand der Aufarbeitung unterschiedlich hohe Anteile C₅₄-Tricarbonsäure (Trimerfettsäure) neben Spuren höherer Polymerfettsäuren enthält. Sowohl hochreine dimere Fettsäuren mit > 97 Gew.-% Dicarbonsäure-Gehalt als auch hydrierte, völlig vergilbungsfreie Typen werden industriell hergestellt.

Oligomere Fettsäuren (a4) stellen Umsetzungsprodukte ungesättigter Fettsäuren untereinander dar, wobei mehr als 2 und maximal 5 Fettsäuremoleküle miteinander reagieren müssen. Diese Säurekomponente stellt ebenfalls eine Mischung von unterschiedlichen Oligomeren untereinander dar.

Weiterhin können Hydroxyfettsäuren als Komponente (a5) Verwendung finden, wobei z.B. die Ricinolsäure und besonders bevorzugt die 12-Hydroxystearinsäure Vertreter dieses Klasse von Fettsäuren sind. Weitere geeignete Fettsäuren sind beispielsweise ausgewählt aus der Gruppe bestehend aus hydrierten Kastorölfettsäuren (Fettsäuren, die kleine Mengen von Stearinsäure und Palmitinsäure, ebenso wie 12-Hydroxystearinsäure enthalten), Sabininsäure, 2-Hydroxytetradecansäure, Ipurolinsäure (3,11-Dihydroxytetradecansäure, 2-Hydroxyhexadecansäure, Jalapinolsäure, Juniperinsäure, Ambrettolsäure, Aleuritinsäure, 2-Hydroxyoctadecansäure, 18-Hydroxyoctadecansäure, 9,10-Dihydroxyoctadecansäure, Kamiolensäure, Ferronsäure, Cerebronsäure, 9-Hydroxystearinsäure und 10-Hydroxystearinsaure.

Auch Mischungen verschiedener Säurekomponenten können gemäß der Alternative (a6) als Säure-Phase (A) eingesetzt werden. Bevorzugt sind hier insbesondere Mischungen aus gesättigten und ungesättigten Fettsäuren und/oder Dicarbonsäuren und/oder Dimer- und/oder Oligomerfettsäuren.

Die Säure-Phase (A) wird mit der Alkohol-Phase (B) unter Bildung eines Partial- oder Vollesters umgesetzt.

Gemäß einer bevorzugten Ausführungsform des erfindungsgemäßen vernetzten Glycerin- oder Oligoglycerinesters stellt die Alkohol-Phase (B) eine Mischung (b6) beinhaltend
b1) 5 bis 45 Gew.-%, besonders bevorzugt 10 bis 40 Gew.-% und am meisten bevorzugt 25 bis 35 Gew.-% Monoglycerin,
b2) 15 bis 45 Gew.-%, besonders bevorzugt 20 bis 40 Gew.-% und am meisten bevorzugt 25 bis 35 Gew.-% Diglycerin,
b3) 10 bis 40 Gew.-%, besonders bevorzugt 15 bis 35 Gew.-% und am meisten bevorzugt 20 bis 30 Gew.-% Triglycerin, sowie
b4) 1 bis 40 Gew.-%, besonders bevorzugt 5 bis 30 Gew.-% und am meisten bevorzugt 10 bis 20 Gew.-% Oligoglycerine aus mehr als drei Glycerin-Einheiten,
dar, wobei die Mengenangaben auf das Gesamtgewicht der Alkhol-Phase (B) bezogen sind.

Gemäß einer besonders bevorzugten Ausführungsform des erfindungsgemäßen vernetzten Glycerin- oder Oligoglycerinesters beinhaltet die zu seiner Herstellung eingesetzte Alkohol-Phase (B) mindestens 80 Gew.-%, besonders bevorzugt mindestens 85 Gew.-% und am meisten bevorzugt mindestens 87 Gew.-%, jeweils bezogen auf das Gesamtgewicht der Alkohol-Phase (B), eines Glycerins mit 2 oder mehr Glycerin-Einheiten. Als Beispiel für eine derartige Alkohol-Phase (B) sei das Produkt POLYGLYCEROL-3 von Solvay Chemicals International SA., Brüssel, Belgien, genannt.

Neben der vorstehend genannten Mischung aus Mono-, Di-, Tri- und Oligoglycerinen kann als Alkohol-Phase (B) auch reines Monoglycerin, reines Diglycerin, reines Triglycerin, reines Polyglycerin oder einer Mischung, welche ausschließlich aus Oligoglycerinen aus mehr als drei Glycerin-Einheiten besteht, eingesetzt werden. Erfindungsgemäß insbesondere bevorzugt ist jedoch der Einsatz einer Mischung beinhaltend etwa 30 Gew.-% Monoglycerin (b1), etwa 30 Gew.-% Diglycerin (b2), etwa 25 Gew.-% Triglycerin (b3) und etwa 15 Gew.-% Oligoglycerin (b4).

Neben den Mono-, Di-, Tri- oder Oligoglycerinen können in der Alkohol-Phase (B) auch die Alkoxylate dieser Glycerine, also die Umsetzungsprodukte von Mono-, Di-, Tri- oder Oligoglycerinen mit Ethylenoxid und/oder Propylenoxid enthalten sein.

Die Herstellung des nichtvernetzten Glycerin- oder Oligoglycerinesters durch Umsetzung der Säure-Phase (A) mit der Alkohol-Phase (B) unter Erhalt eines Voll- oder Partialesters kann durch jedes dem Fachmann bekannte Verfahren zur Herstellung eines Esters aus Alkoholen und Fettsäuren, aus Alkoholen und Hydroxyfettsäuren oder aus Alkoholen und Derivaten von Fettsäuren oder Hydroxyfettsäuren erfolgen. Beispielhaft sei an dieser Stelle auf die EP-A-0 064 697 verwiesen, in der die Herstellung von Oligolycerinestem mittels basischer Katalyse aus Fettsäuren und Poly bzw. Oligoglycerinen beschrieben wird.

Die erfindungsgemäßen vernetzten Glycerin- oder Oligoglycerinester sind vernetzt. Solche vernetzten Glycerin- oder Oligoglycerinester sind beispielsweise dadurch erhältlich, dass die vorstehend beschriebenen Voll- oder Partialester mittels eines geeigneten Vernetzers vernetzt werden, wobei als Vernetzer Verbindungen eingesetzten werden, welche mindestens zwei funktionelle Gruppen aufweisen, die mit freien OH-Gruppen des Partial- oder Vollesters zu reagieren vermögen.

Die Formulierung *"wobei der vernetzte Glycerin- oder Oligoglycerinester erhältlich ist durch Vernetzung eines nichtverrzetzten Glycerin- oder- Oligoglycerinesters",* wie sie hierin verwendet wird, soll lediglich zum Ausdruck beringen, dass der vernetzte Glycerin- oder Oligoglycerinester eine chemische Struktur aufweist, wie sie erhalten werden kann, wenn ein vorstehend beschriebener, nichtvernetzter Glycerin- oder Oligoglycerinester nach seiner Herstellung nachträglich vernetzt wird. Von der vorstehend wiedergegebenen Formulierung umfasst sind jedoch auch vernetzte Glycerin- oder Oligoglycerinester, die beispielsweise dadurch erhalten wurden, dass die Vernetzung mittels der vorstehend beschriebenen Vernetzer während der Umsetzung der Säure-Phase (A) mit der Alkohol-Phase (B) erfolgt.

Gemäß einer bevorzugten Ausführungsform der erfindungsgemäßen vernetzten Glycerin- oder Oligoglycerinester handelt es sich bei dem nichtvernetzten Glycerin- oder Oligoglycerinester um einen Partialester und bei dem Vernetzer um eine Verbindung, welche mindestens zwei funktionelle Gruppen aufweist, die mit den freien OH-Gruppen des Partialesters unter Bildung einer kovalenten Bindung zu reagieren vermögen.

Ein solcher Partialester ist vorzugsweise dadurch erhältlich, dass die Alkhol-Komponente (B) mit der Säure-Komponente (A) in einem Molverhältlnis OH-Gruppen : Säuregruppen in einem Bereich von 1,1 : 1 bis 4 : 1, besonders bevorzugt 1,2 : 1 bis 3 : 1 und am meisten bevorzugt 1,3 : 1 bis 2 : 1 umgesetzt wird. Der Ausdruck *"Molverhältlnis OH-Gruppen : Säuregruppen"* gibt dabei das Molverhältnis der Summe aller OH-Gruppen der Alkohol-Phase (B) zur Summe aller Säure-Gruppen in der Säure-Phase (A) an. Wird beispielsweise als Alkohol-Phase (B) eine Zusammensetzung aus etwa 30 Gew.-% Monoglycerin (b1), etwa 30 Gew.-% Diglycerin (b2), etwa 25 Gew.-% Triglycerin (b3) und etwa 15 Gew.-% Oligoglycerin eingesetzt, welche im Mittel etwa 4 OH-Gruppen pro Glycerin- bzw. Oligoglycerin-Einheit aufweist, so werden bei einem Molverhältlnis von OH-Gruppen : Säuregruppen von beispielsweise 1,33 etwa 3 Mol Säure pro Mol Glycerin- bzw. Oligoglycerin eingesetzt.

In diesem Zusammenhang ist es weiterhin bevorzugt, dass es sich bei dem Vernetzter, welcher mindestens zwei funktionelle Gruppen aufweist, die mit den freien OH-Gruppen des Partialesters unter Bildung einer kovalenten Bindung zu reagieren vermögen, um eine Dicarbonsäure, eine Dimerfettsäure, eine Hydroxycarbonsäure, ein Diepoxid, oder um ein Tetraalkoxysilan handelt. Bei einem Einsatz von Dicarbonsäuren erfolgt mithin die Vernetzung vorzugsweise über eine Veresterung der noch freien OH-Gruppen mittels der Dicarbonsäure. Bevorzugte Dicarbonsäuren sind insbesondere ausgewählt aus der Gruppe bestehend aus Phthalsäureanhydrid, Isophthalsäure, Terephthalsäure, Tetrahydrophthalsäureanhydrid, Hexahydrophthalsäureanhydrid, Naphthalindicarbonsäure, 4,4'-Biphenyldicarbonsäure, Diphenylmethan-4,4'-dicarbonsäure, Bernsteinsäure, Fumarsäure, Adipinsäure, Sebacinsäure, Azelainsäure und Maleinsäureanhydrid, wobei unter diesen Adipinsäure und Azelainsäure besonders bevorzugt sind. Als Hydroxycarbonsäuren können beispielsweise Hydroxycarbonsäuren ausgewählt aus der Gruppe bestehend aus Zitronensäure, L-Milchsäure, D-Milchsäure, DL-Milchsäure, Glykolsäure, 3-Hydroxybuttersäure, 4-Hydroxybuttersäure, 4-Hydroxyvaleriansäure, 5-Hydroxyvaleriansäure, 6-Hydroxycapronsäure sowie Mischungen dieser Hydroxycarbonsäuren eingesetzt werden, wobei unter diesen Zitronensäure und Milchsäure besonders bevorzugt sind. Als Tetraalkoxysilan kommt insbesondere Tetraethoxysilan in Betracht. Erfindungsgemäß besonders bevorzugte Vernetzer unter den vorstehend genannten Vernetzern sind Dimerfettsäuren, Adipinsäure und Azelainsäure.

Gemäß einer anderen bevorzugten Ausführungsform der erfindungsgemäßen vernetzten Glycerin- oder Oligoglycerinester handelt es sich bei dem nichtvernetzten Glycerin- oder Oligoglycerinester um einen Vollester und bei dem Vernetzer um eine Verbindung, welche mindestens zwei funktionelle Gruppen aufweist, die mit funktionellen Gruppen der zur Esterherstellung eingesetzten Säurekomponente, beispielsweise mit den OH-Gruppen der Hydroxyfettsäuren, unter Bildung einer kovalenten Bindung zu reagieren vermögen. Als Vernetzer kommen auch hier insbesondere Dicarbonsäuren oder Tetraalkoxysilane in Betracht.

Die Mengen, in denen die vorstehend genannten Vernetzer zugesetzt werden, hängen davon ab, wie stark die Vernetzung der nichtvernetzten Glycerin- oder Oligoglycerinester erfolgen soll. Die für den jeweiligen Anwendungsbereich optimale Vernetzung kann durch den Fachmann mittels einfacher Routineversuche, in denen der Vernetzer in steigenden Mengen eingesetzt wird, leicht ermittelt werden. Die Reaktionsbedingungen, insbesondere die Temperaturbedingen, unter denen die Vernetzung durchgeführt wird, hängen von der Art des eingesetzten Vernetzer ab. Üblicherweise jedoch wird die Vernetzung bei einer Temperatur in einem Bereich von 50 bis 300°C, besonders bevorzugt in einem Bereich von 100 bis 250°C durchgeführt.

Einen Beitrag zur Lösung der eingangs genannten Aufgaben leistet auch ein Verfahren zur Herstellung eines vernetzten Glycerin- oder Oligoglycerinesters, umfassend die Verfahrensschritte
i) Bereitstellung einer Säure-Phase (A), beinhaltend eine
   (a1) eine Fettsäure, oder
   (a2) eine Dicarbonsäure, oder
   (a3) eine Dimerfettsäure, oder
   (a4) eine Oligomerfettsäure, oder
   (a5) eine Hydroxyfettsäure oder
   (a6) eine Mischung von mindestens zwei davon;
ii) Bereitstellung einer Alkohol-Phase (B) beinhaltend
   (b1) Monoglycerin, oder
   (b2) Diglycerin, oder
   (b3) Triglycerin, oder
   (b4) Oligoglycerin aus mehr als drei Glycerin-Einheiten, oder
   (b5) ein Alkoxylat der Glycerine (b1), (b2), (b3) oder (b4), oder
   (b6) eine Mischung aus mindestens zwei davon;
iii) Umsetzung der Säure-Phase (A) mit der Alkohol-Phase (B) unter Bildung eines Voll- oder Partialesters;
iv) Vernetzung des Voll- oder Partialesters mittels eines Vernetzers,
wobei die Vernetzung während oder nach der Bildung des Voll- oder Partialesters erfolgen kann und wobei der Vernetzer eine Verbindung ist, welche mindestens zwei funktionelle Gruppen aufweist, die mit den freien OH-Gruppen des Voll- oder Partialesters unter Bildung einer kovalenten Bindung zu reagieren vermögen.

Als Säure-Phase (A), Alkohol-Phase (B) und Vernetzer sind dabei diejenigen Säure-Phasen, Alkohol-Phasen und Vernetzer bevorzugt, die bereits eingangs im Zusammenhang mit den erfindungsgemäßen vernetzten Glycerin- oder Oligoglycerinestern als bevorzugte Säure-Phase (A), Alkohol-Phase (B) und Vernetzer genannt wurden.

Gemäß einer besonderen Ausführungsform des erfindungsgemäßen Verfahrens zur Herstellung eines vernetzten Glycerin- oder Oligoglycerinesters erfolgt die Vernetzung während der Bildung des Voll- oder Partialesters. Gemäß einer anderen besonderen Ausführungsform des erfindungsgemäßen Verfahrens zur Herstellung eines vernetzten Glycerin- oder Oligoglycerinesters erfolgt die Vernetzung nach der Bildung des Voll- oder Partialesters. Erfindungsgemäß bevorzugt ist jedoch ein Verfahren, bei dem zunächst ein nichtvernetzter Glycerin- oder Oligoglycerinester gebildet und erst anschließend eine Vernetzung erfolgt

Einen Beitrag zur Lösung der eingangs genannten Aufgaben leistet auch eine Zusammensetzung, beinhaltend als eine Komponente den vorstehend beschriebenen, vernetzten Glycerin- oder Oligoglycerinester und mindestens eine weitere Komponente. Dabei ist es insbesondere bevorzugt, dass diese Zusammensetzung eine

Öl-Phase, eine wässrige Phase oder eine Emulsion umfassend eine Öl-Phase und eine wässrige Phase als mindestens eine weitere Komponente beinhaltet. Insbesondere kann es sich bei der Zusammensetzung um eine Wasser-in-Öl-Emulsion, eine Öl-in-Wasser-Emulsion oder eine wässrige Lösung handeln.

Gemäß einer besonderen Ausführungsform der erfindungsgemäßen Zusammensetzung handelt es sich bei dieser Zusammensetzung um eine Wasser-in-Öl-Emulsion.

In diesem Zusammenhang ist es insbesondere bevorzugt, dass die Zusammensetzung
I) 28,9 bis 99 Gew.-%, besonders bevorzugt 60 bis 90 Gew.-% und am meisten bevorzugt 70 bis 80 Gew.-%, jeweils bezogen auf das Gesamtgewicht der Zusammensetzung, einer mit Wasser nicht mischbaren, organischen Öl-Phase,
II) 1 bis 48 Gew.-%, vorzugsweise, besonders bevorzugt 5 bis 40 Gew.-% und am meisten bevorzugt 10 bis 30 Gew.-%, jeweils bezogen auf das Gesamtgewicht der Zusammensetzung, Wasser oder wässrige Phase,
III) 0,1 bis 20 Gew.-%, besonders bevorzugt 1 bis 15 Gew.-% und am meisten bevorzugt 5 bis 10 Gew.-%, jeweils bezogen auf das Gesamtgewicht der Zusammensetzung, des eingangs beschriebenen vernetzten Glycerin- oder Oligoglycerinesters, sowie
IV) 0 bis 70 Gew.-%, besonders bevorzugt 1 bis 5 Gew.-% und am meisten bevorzugt 1,5 bis 3 Gew.-%, jeweils bezogen auf das Gesamtgewicht der Zusammensetzung, mindestens eines weiteren Additivs,
enthält, wobei die Summe der Komponenten I) bis IV) 100 Gew.-% beträgt.

Im Zusammenhang mit der vorstehend beschriebenen Wasser-in-Öl-Emulsion ist es bevorzugt, dass die organische Öl-Phase I) ganz oder teilweise ausgewählt ist aus der Gruppe der
a) Paraffine mit 5 bis 22 C-Atomen und/oder
b) Paraffine mit 5 bis 22 C-Atomen und/oder
c) internen Olefine mit 12 bis 30 C-Atomen im Molekül und/oder
d) Carbonsäureestern der allgemeinen Formel R-COO-R, in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, und/oder
e) Mineralöle, und/oder
f) lineare alpha-Olefine (LAOs) mit 12 bis 30 C-Atomen, und/oder
g) Carbonate.

In diesem Zusammenhang ist es weiterhin bevorzugt, dass diese Wasser-in-Öl-Emulsion eine Dichte der flüssigen Komponente in einem Bereich von 1,2 bis 3,0 g/cm³ und insbesondere in einem Bereich von 1,5 bis 3,0 g/cm³ aufweist. Die Öl-Phase der erfindungsgemäßen Systeme enthält die Komponenten a) bis e) alleine oder die Komponenten a), b), d) oder e) gemeinsam in Abmischung mit Estern c) sowie gegebenenfalls in Abmischung mit anderen geeigneten Öl-Phasen. Es sind auch beliebige Mischungen der Öl-Phasen a) bis e) untereinander möglich.

### Komponente a)

Als Komponente a) werden erfindungsgemäß lineare oder verzweigte Paraffine mit 5 bis 22 C-Atomen eingesetzt. Paraffine - korrekter bezeichnet als Alkane - sind bekanntermaßen gesättigte Kohlenwasserstoffe, die für die linearen bzw. verzweigten Vertreter der allgemeine Summenformel CₙH₂ₙ₊₁ folgen. Die cyclischen Alkane folgen der allgemeinen Summenformel CₙH₂ₙ. Besonders bevorzugt sind die linearen und verzweigten Paraffine, wohingegen cyclische Paraffine weniger bevorzugt sind. Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21 °C noch flüssig sind. Solche Mischungen können z.B. aus Paraffinen mit 10 bis 21 C-Atomen gebildet werden. Paraffine sind besonders bevorzugte Öl-Phasen - alleine oder als Mischungsbestandteil mit weiteren Öl-Phasen - in Bohrspülungen - vorzugsweise solchen des Invert-Typs, in denen die erfindungsgemäßen vernetzten Glycerin- oder Oligoglycerinester als Verdicker Verwendung finden.

### Komponente b)

Als Komponente b) sind interne Olefine (im Weiteren als IO abgekürzt) erfindungsgemäß einsetzbar. Dabei sind IOs ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der Alpha-Position der Alkylkette befindet. Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten.

### Komponente c)

Weiterhin sind Ester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 6 bis 22 C-Atomen bedeutet, Bestandteil der erfindungsgemäßen Öl-Phasen. Auch derartige Ester sind bekannte chemische Verbindungen. Deren prinzipielle Verwendung in Bohrspülungen ist z. B. Gegenstand der EP 0 374 672 A1 bzw. der EP 0 374 671 A1. Besonders bevorzugt ist die Verwendung solcher Ester deren Rest R für einen gesättigten oder ungesättigten Alkylrest mit 15 bis 25 und R' für einen gesättigten Alkylrest mit 3 bis 10 C-Atomen steht. Die gesättigten Verbindungen sind dabei im Besonderen bevorzugt. Es ist im Rahmen der erfinderischen Lehre bevorzugt dass in der Öl-Phase neben den Estern gemäß obiger Beschreibung maximal 15 Gew.-% (bezogen die Öl-Phase) an anderen Estern mit Resten R, die für Alkyl-Reste mit mehr als 23 C-Atomcn stehen, enthalten sind.

### Komponente d)

Mineralöle sind eine Sammelbezeichnung für die aus mineralischen Rohstoffen (Erdöl, Braun- und Steinkohlen, Holz oder Torf) gewonnenen flüssigen Destillationsprodukte, die im Wesentlichen aus Gemischen von gesättigten Kohlenwasserstoffen bestehen. Vorzugsweise enthalten die Mineralöle nur geringe Mengen an aromatischen Kohlenwasserstoffen, vorzugsweise weniger als 3 Gew.-%. Bevorzugt sind bei 21 °C flüssige Mineralöle auf Basis von Erdöl. Die Mineralöle weisen vorzugsweise Siedepunkte von 180 bis 300 °C auf.

### Komponente e)

Lineare alpha-Olefine (kurz LAO) sind unverzweigte in 1-Postion ("alpha-C-Atom") ungesättigte Kohlenwasserstoffe. Sie können naturstoffbasiert sein, werden aber insbesondere in großem Umfange auch synthetisch gewonnen. Naturstoffbasierte LAO werden durch Dehydratisierung naturstoffbasierter Fettalkohole als lineare Produkte mit geradkettiger Kohlenstoffzahl gewonnen. Auch die auf synthetischem Wege gewonnenen LAO - hergestellt durch Oligomerisation von Ethylen - enthalten häufig geradkettige Kohlenstoffzahlen in der Kette, es sind heute aber auch Verfahren zur Herstellung von ungradzahligen alpha-Olefinen bekannt. Im Sinne der erfindungsgemäßen Definition weisen - aufgrund ihrer Flüchtigkeit - in der Regel wenigstens 10, vorzugsweise wenigstens 12 bis 14 C-Atome im Molekül auf. Die Obergrenze der bei Raumtemperatur fließfähige LAO liegt im Bereich von C₁₈ bis C₂₀. Diese Obergrenze ist aber für die Verwertbarkeit dieser Stoffklasse im Rahmen der Erfindung nicht einschränkend. Die Obergrenze geeigneter LAO-Verbindungen für den Einsatz im Rahmen der erfindungsgemäßen Lehre liegt also deutlich über dem zuvor genannten Grenzwert von C₁₈ bis C₂₀ und kann beispielsweise C₃₀ erreichen.

### Komponente f)

Unter Carbonaten werden im Rahmen der vorliegenden Anmeldung Kohlensäureester von Fettalkoholen mit 8 bis 22 C-Atomen verstanden, vorzugsweise die Diester der Kohlensäure. Solche Verbindungen und deren Einsatz als Öl-Phase für Bohrspülmittel sind beschrieben in der DE 40 18 228 A1.

Neben den Komponente a) bis f) können noch andere, wasserunlösliche Bestandteile in der Öl-Phase I) enthalten sein, sofern diese ökologisch verträglich sind. Weitere besonders geeignete Mischungsbestandteile der erfindungsgemäßen Öl-Phase I) sind daher im Einzelnen:
(i) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, wasserunlösliche Ether einwertiger Alkohole mit 6 bis 24 C-Atomen,
(iii) wasserunlösliche Alkohole mit 8 bis 36 C-Atomen
(iv) poly-alpha-Olefine (PAO)
(v) Mischungen der Komponente (i) bis (iv)

Die Öl-Phase I) der erfindungsgemäßen Zusammensetzung in Form einer Wasser-in-Öl-Emulsion weisen vorzugsweise Pourpoints unterhalb 0°C, vorzugsweise unterhalb -5 °C (gemessen nach DIN ISO 3016: 1982-10) auf. Die Brookfield-Viskosität der Öl-Phase beträgt bei 0 °C höchstens 50 mPas. Die erfindungsgemäßen Bohrlochbehandlungsmittel weisen, sofern sie als ölbasierte Bohrspülung vom W/O-Typ ausgebildet sind, eine plastische Viskosität (PV) im Bereich von 10 bis 70 mPas und eine Fließgrenze (Yield-Point YP) von 5 bis 60 lb/100 ft², jeweils bestimmt bei 50 °C, auf. Die kinematische Viskosität der Öl-Phase gemessen nach Ubbelohde bei 20 °C sollte vorzugsweise höchstens 12 mm²/sec betragen. Die wässerige Phase der erfindungsgemäßen Mittel weist vorzugsweise einen pH-Wert im Bereich von 7,5 bis 12, vorzugsweise von 7,5 bis 11 und insbesondere von 8 bis 10 auf.

Als wässrige Phase gemäß der Komponente II) enthält die erfindungsgemäße Zusammensetzung vorzugsweise wässrigen Salzlösungen, vorzugsweise gesättigte Salzlösungen, wobei als Salze alle dem Fachmann bekannten Alkali- oder Erdalkali-Halogenide eingesetzt werden können. Als Beispiele geeigneter Salze seien insbesondere KCl, NaCl, LiCl, KBr, NaBr, LiBr, CaCl₂, und MgCl₂ genannte, wobei unter diesen CaCl₂, NaCl und KCl oder Mischungen dieser Salze besonders bevorzugt sind.

Als weitere Additive, welche gemäß der Komponente IV) in der erfindungsgemäßen Zusammensetzung enthalten sein können, kommen insbesondere Additive ausgewählt aus der Gruppe bestehend aus Tensiden als Zumischkomponente für den vernetzten Glycerin- oder Oligoglycerinester, Beschwerungsmitteln, *fluid-loss*-Additiven, pH-Modifizierern, weiteren viskositätsmodifizierenden Additiven, Netzmitteln, Salzen, Bioziden, Mitteln zur Inhibierung des unerwünschten Wasseraustausches zwischen erbohrten Formationen - z. B wasserquellbare Tone und/oder Salzschichten - und der z. B. wasserbasierten Spülflüssigkeit, Netzmitteln zum besseren Aufziehen der emulgierten Öl-Phase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Korrosionsinhibitoren, Alkalireserven und Emulgatoren in Betracht.

Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden. Die Additive können wasserlöslich, öllöslich und/oder wasser- bzw. öl-dispergierbar sein.

Als Tenside können anionische, nichtionischem zwitterionische oder kationische Tenside Verwendung finden. Bevorzugt sind aber die nichtionischen und die anionischen Tenside. Typische Beispiele für anionische Tenside sind Seifen, Alkylbenzolsulfonate, Alkansulfonate, Olefinsulfonate, Alkylethersulfonate, Glycerinethersulfonate, Methylestersulfonate, Sulfofettsäuren, Alkylsulfate, Fettalkoholethersulfate, Glycerinethersulfate, Fettsäureethersulfate, Hydroxymischethersulfate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze. Letztere sind im Sinne der vorliegenden technischen Lehre besonders bevorzugte Tensidkomponenten. Typische Beispiele für nichtionische Tenside sind Fettalkoholpolyglycolether, Alkylphenolpolyglycolether, Fettsäurepolyglycolester, Fettsäureamidpolyglycolether, Fettaminpolyglycolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen. Die Tenside sind eine optionaler Bestandteil in den Additiven. Sie werden vorzugsweise in Mengen von 0,01 bis 2 Gew.-%, insbesondere von 0,1 bis 1,5 Gew.-% und bevorzugt von 0,2 bis 0,5 Gew.-% eingesetzt, jeweils bezogen auf die gesamte Wasser-in-Öl-Emulsion, verwendet.

Als Emulgatoren kommen vorzugsweise nichtionische Emulgatoren in Frage, die insbesondere einer der nachfolgenden Stoffklassen zuordnen sind: (Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Alkoxylate der angegebenen Art sind bekanntlich als solche - d.h. mit endständiger freier Hydroxylgruppe am Alkoxylatrest - nicht-ionische Emulgatoren, die entsprechenden Verbindungen können aber auch Endgruppenverschlossen sein, beispielsweise durch Veresterung und/oder Veretherung. Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Geeignet sind dabei insbesondere auch Verbindungen dieser Art, die zusätzlich in ihre Molekülstruktur (Oligo-)Alkoxyreste und dabei insbesondere entsprechende Oligo-Ethoxyreste eingebunden enthalten. Die polyfunktionellen Alkohole mit 2 bis 6 OH-Gruppen im Grundmolekül beziehungsweise die sich davon ableitenden Oligomeren können insbesondere Diole und/oder Triole beziehungsweise deren Oligomerisierungsprodukte sein, wobei dem Glykol und dem Glycerin oder ihren Oligomeren besondere Bedeutung zukommen kann. Dem Bereich von Partialethern mehrfunktioneller Alkohole sind auch bekannte nichtionische Emulgatoren von der Art der Ethylenoxid/Propylenoxid/Butylenoxid-Blockpolymeren zuzuordnen. Ein weiteres Beispiel für entsprechende Emulgatorkomponenten sind Alkyl(poly)glykoside langkettiger Alkohole sowie die bereits benannten Fettalkohole natürlichen und/oder synthetischen Ursprungs beziehungsweise Alkylolamide, Aminoxide und Lecithine. Die Mitverwendung heute handelsüblicher Alkyl(poly)glykosid-Verbindungen (APG-Verbindungen) als Emulgatorkomponenten im erfindungsgemäßen Sinn kann unter anderem deswegen besonders interessant sein, weil es sich hier um eine Emulgatorklasse besonders ausgeprägter Ökoverträglichkeit handelt. Ohne Anspruch auf Vollständigkeit seien aus den hier aufgezählten Stoffklassen geeigneter Emulgatorkomponenten zusätzlich die folgenden Vertreter benannt: (Oligo)alkoxylate von Fettalkoholen, Fettsäuren, Fettamine, Fettamide, Fettsäure- und/oder Fettalkoholester und/oder - ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Wie angegeben können die jeweiligen Umsetzungsprodukte auch wenigstens anteilsweise Endgruppenverschlossen sein. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbindungen mit Ethergruppierungen.

Auch der Mitverwendung organischer Polymerverbindungen natürlichen und/oder synthetischen Ursprungs als weitere Additive kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Verdünner zur Viskositätsregulierung: Die so genannten Verdünner können organischer oder anorganischer Natur sein, Beispiele für organische Verdünner sind Tannine und/oder Qebracho- Extrakt. Weitere Beispiele hierfür sind Lignit und Lignitderivate, insbesondere Lignolsulfonate.

Da die in der erfindungsgemäßen Zusammensetzung enthaltenen vernetzten Glycerin- oder Oligoglycerinester als Verdickungsmittel fungieren, ist es gemäß einer bevorzugten Ausführungsform der erfindungsgemäßen Zusammensetzung nicht erforderlich, weitere Verdickungsmittel, insbesondere weitere, auf wasserunlöslichen, anorganischen Komponenten basierende Verdickungsmittel zuzusetzen. Dennoch kann es sich als vorteilhaft erweisen, die vernetzten Glycerin- oder Oligoglycerinester gegebenenfalls in Kombination mit mindestens einem weiteren Verdickungsmittel einzusetzen. Erfindungsgemäß bevorzugte, weitere Verdickungsmittel umfassen insbesondere Baryt, Calcit, Mullit, Dolomit, Galen, Hematit, Manganoxide, Eisenoxide oder Mischungen dieser Verbindungen, wasserlösliche Verdickungsmittel, wie wasserlösliche Zinksalze, wasserlösliche Eisensalze, wasserlösliche Bariumsalze, wasserlösliche Kalziumsalze oder Mischungen dieser Salze. Konkrete Beispiele für geeignete, weitere Verdickungsmittel umfassen Fe₂O₃, MnO₄ und CaCO₃. Viskosität erhöhende Mittel können organische oder anorganische Verbindungen sein, wie beispielsweise Xanthan, Gummi, Guar-Gummi, Glykol, Carboxymethylcellulose, polyanionische Cellulose oder Stärke. Das zum Einstellen eines erforderlichen Druckausgleichs erfindungsgemäß Bevorzugte, weitere Benetzungsmittel ist Baryt.

Als bevorzugte Mittel gegen Flüssigkeitsverlust (*fluid-loss-*Additiv) ist insbesondere organophiler Lignit, während bevorzugte pH-Modifizierer beispielsweise der EP 0 382 701 A1 entnommen werden können. Die in der der EP 0 382 701 A1 beschriebene Erfindung basiert auf der Erkenntnis, dass in Ester-basierten Bohrspülungen des Wasser-in-Öl-Typs Additive eingesetzt werden sollten, welche sicherstellen, dass sich die rheologischen Eigenschaften der Bohrspülung auch dann nicht ändern, wenn durch partielle Esterhydrolyse steigende Mengen an freien Carbonsäuren freigesetzt werden. Diese freien Carbonsäuren sollten möglichst in Verbindungen überführt werden, welche stabilisierende und emulgierende Eigenschaften aufweisen. Zu diesem Zweck schlägt die EP 0 382 701 A1 vor, alkalische Amine mit hoher oleophilie und möglichst geringer Wasserlöslichkeit zuzusetzen, welche mit den freien Säuren Salze zu bilden vermögen. Typische Beispiele für solche Amin-Verbindungen sind primäre, sekundäre und/oder tertiäre Amine, die überwiegende wasserunlöslich sind und die zudem zumindest teilweise alkoxyliert und/oder mit Hydroxyl-Gruppen substituiert sein können. Weitere Beispiele umfassen Aminoamide und/oder Heterocyclen, welche Stickstoff als Ringatom enthalten. Geignet sind beispielsweise basische Amine, welche mindestens einen langkettigen Kohlenwasserstoff-Rest mit 8 bis 36 Kohlenstoffatomen, vorzugsweise mit 10 bis 24 Kohlenstoffatomen aufweisen, wobei diese Kohlenwasserstoff-Reste auch ein- oder mehrfach ungesättigte sein können.

Die Die Mengen, in denen die vorstehend beschriebenen, weiteren Additive der erfindungsgemäßen Zusammensetzung im Falle einer Wasser-in-Öl-Emulsion zugesetzt werden, entsprechend üblicherweise denjenigen Mengen, in denen diese Verbindungen den aus dem Stand der Technik bekannten Bohrspülungen auf Wasser-in-Öl-Basis zugesetzt werden.

Bei wenig beschwerten Zusammensetzungen handelt es sich bei der Komponente IV) vorzugsweise um ein Beschwerungsmittel, wie etwa BaSO₄, wobei im Falle einer wenig bescherten Zusammensetzung die Komponente IV) vorzugsweise in einer Menge von bis zu 20 Gew.-% eingesetzt wird. Bei stärker beschwerten Zusammensetzungen wird die Komponente IV) vorzugsweise in einer Menge von 20 bis 50 Gew.-% eingesetzt, während in stark beschwerten Zusammensetzungen 50 bis 70 Gew.-% der Komponente IV) eingesetzt werden können.

Weiterhin ist es erfindungsgemäß bevorzugt, dass die Zusammensetzung, sofern sie als Wasser-in-Öl-Emulsion vorliegt, eine Nanoemulsion oder eine Mikroemulsion ist, welche vorzugsweise Wassertropfen oder Tropfen einer wässrigen Phase mit einer Tropfengröße von weniger als 1000 µm, vorzugsweise mit einer Tropfengröße in einem Bereich von 5 nm bis 1000 µm, besonders bevorzugt mit einer Tropfengröße in einem Bereich von 10 nm bis 850 µm, noch mehr bevorzugt mit einer Tropfengröße in einem Bereich von 20 nm bis 700 µm, noch mehr bevorzugt mit einer Tropfengröße in einem Bereich von 50 nm bis 500 µm beinhaltet. Die Begriff "*Mikroemulsion"* und "*Nanoemulsion"* kennzeichnen erfindungsgemäß Emulsion, welche Tropfen im Mikrometer- bzw. Nanometerbereich beinhalten, wobei es eine gewisse Überscheidung dieser beiden Bereiche und somit auch dieser beiden Begriffe geben kann. Gemäß eines Teiles der Fachliteratur und auch des Bohrspülungen betreffenden Standes der Technik werden unter Mikroemulsionen vorzugsweise solche Emulsionen verstanden, die sich spontan bei einer Kombination der Emulsionskomponenten bilden, wohingegen die Bildung von Nanoemulsionen üblicherweise das Zuführen von Energie, beispielsweise in Form eines Homogenisierens, insbesondere in Form einer Hochdruckhomogenisation, erfordert.

Im Falle einer Wasser-in-Öl-Emulsion als erfindungsgemäße Zusammensetzung kann diese durch jedes dem Fachmann bekannte Verfahren zur Herstellung einer solchen Wasser-in-Öl-Emulsion hergestellt werden. So ist es insbesondere denkbar, zunächst die Basis-Emulsion aus der organischen Öl-Phase als kontinuierliche Phase und den darin emulgierten Wassertropfen herzustellen und erst dann den eingangs beschriebenen vernetzten Glycerin- oder Oligoglycerinester und gegebenenfalls die weiteren Additive zuzusetzen. Denkbar ist jedoch auch, zunächst die eingangs beschriebenen vernetzten Glycerin- oder Oligoglycerinester der organischen Öl-Phase zuzusetzen und dann aus dieser Öl-Phase und dem Wasser bzw. der wässrigen Lösung die Emulsion zu bilden.

Gemäß einer anderen besonderen Ausführungsform der erfindungsgemäßen Zusammensetzung handelt es sich bei dieser um eine wässrige Lösung oder um eine Öl-in-Wasser-Emulsion.

In diesem Zusammenhang ist es insbesondere bevorzugt, dass die Zusammensetzung
I) 0 bis 48 Gew.-%, besonders bevorzugt 0,1 bis 20 Gew.-% und am meisten bevorzugt 1 bis 10 Gew.-%, jeweils bezogen auf das Gesamtgewicht der Zusammensetzung, einer mit Wasser nicht mischbaren organischen Öl-Phase,
II) 29,9 bis 99,9 Gew.-%, besonders bevorzugt 60 bis 99 Gew.-% und am meisten bevorzugt 70 bis 95 Gew.-%, jeweils bezogen auf das Gesamtgewicht der Zusammensetzung, Wasser oder wässrige Phase,
III) 0,1 bis 20 Gew.-%, besonders bevorzugt 1 bis 15 Gew.-% und am meisten bevorzugt 5 bis 10 Gew.-%, jeweils bezogen auf das Gesamtgewicht der Zusammensetzung, des eingangs beschriebenen vernetzten Glycerin- oder Oligoglycerinesters,
IV) 0 bis 70 Gew.-%, besonders bevorzugt 1 bis 5 Gew.-% und am meisten bevorzugt 1,5 bis 3 Gew.-%, jeweils bezogen auf das Gesamtgewicht der Zusammensetzung, mindestens eines weiteren Additivs,
wobei die Summe der Komponenten I) bis IV) 100 Gew.-% beträgt.

Als organische Öl-Phase, wässrige Phase und weitere Additive sind diejenigen organischen Öl-Phasen, wässrige Phasen und weiteren Additive bevorzugt, die bereits vorstehend im Zusammenhang mit der Wasser-in-Öl-Emulsion genannt wurden.

Auch im Falle einer Öl-in-Wasser-Emulsion als erfindungsgemäße Zusammensetzung kann diese durch jedes dem Fachmann bekannte Verfahren zur Herstellung einer solchen Öl-in-Wasser-Emulsion hergestellt werden. So ist es insbesondere denkbar, zunächst die Basis-Emulsion aus Wasser bzw. der wässrigen Lösung als kontinuierliche Phase und den darin emulgierten Tropfen der Öl-Phase herzustellen und erste dann den eingangs beschriebenen vernetzten Glycerin- oder Oligoglycerinester und gegebenenfalls die weiteren Additive zuzusetzen. Denkbar ist jedoch auch, zunächst die eingangs beschriebenen vernetzten Glycerin- oder Oligoglycerinester der organischen Öl-Phase zuzusetzen und dann aus dieser Öl-Phase und dem Wasser bzw. der wässrigen Lösung die Emulsion zu bilden. Einen Beitrag zur Lösung der eingangs genannten Aufgaben leistet auch die Verwendung der vorstehend beschriebenen Zusammensetzung, insbesondere der vorstehend beschriebenen Zusammensetzung in Form einer Wasser-in-Öl-Emulsion, einer wässrigen Lösung oder einer Öl-in-Wasser-Emulsion, beim Bohren von Bohrlöchern.

Einen Beitrag zur Lösung der eingangs genannten Aufgaben leistet auch ein Verfahren zum Herstellen von Bohrlöchern, bei dem eine Bohrspülung durch ein Bohrloch gepumpt wird, wobei als Bohrspülung eine Zusammensetzung wie vorstehend beschrieben, insbesondere jedoch eine Zusammensetzung in Form einer Wasser-in-Öl-Emulsion, einer wässrigen Lösung oder einer Öl-in-Wasser-Emulsion, wie vorstehend beschrieben, verwendet wird.

Gemäß einer bevorzugten Ausführungsform dieses Verfahrens zum Herstellen von Bohrlöchern umfasst dieses die Verfahrensschritte:
(α1) das Bereitstellen der erfindungsgemäßen Zusammensetzung, insbesondere der erfindungsgemäßen Zusammensetzung in Form einer Wasser-in-Öl-Emulsion, einer wässrigen Lösung oder einer Öl-in-Wasser-Emulsion;
(α2) das Bohren eines Loches in die Erde;
(α3) das Einleiten, vorzugsweise das Zirkulieren, der im Verfahrensschritt (α1) bereitgestellten Zusammensetzung zumindest teilweise in das bzw. in dem Bohrloch;
wobei das Einleiten, vorzugsweise das Zirkulieren vorzugsweise mindestens teilweise während des Bohrens in Verfahrensschritt (α2) erfolgt.

Die erfindungsgemäße Zusammensetzung wirkt mithin als Bohrspülung beim Bohren von Löchern in die Erde, vorzugsweise beim Erbohren von Erdöl oder Erdgas.

Einen Beitrag zur Lösung der eingangs genannten Aufgaben leistet mithin auch ein Verfahren zur Herstellung eines Öls oder eines Gases, beinhaltend die Verfahrensschritte:
(α1) das Bereitstellen der erfindungsgemäßen Zusammensetzung, insbesondere der erfindungsgemäßen Zusammensetzung in Form einer Wasser-in-Öl-Emulsion, einer wässrigen Lösung oder einer Öl-in-Wasser-Emulsion;
(α2) das Bohren eines Loches in die Erde;
(α3) das Einleiten, vorzugsweise das Zirkulieren der im Verfahrensschritt (α1) bereitgestellten Zusammensetzung zumindest teilweise in das bzw. in dem Bohrloch, wobei auch hier das Einleiten bzw. das Zirkulieren vorzugsweise mindestens teilweise während des Bohrens in Verfahrensschritt (α2) erfolgt;
(α4) das Fördern von Öl oder Gas aus der Erde durch das im Verfahrensschritt (α2) gebohrte Loch;
(α2) gegebenenfalls das Reinigen oder Raffinieren des im Verfahrensschritt (α3) geförderten Öls oder Gases.

Einen weiteren Beitrag zur Lösung der eingangs genannten Aufgaben leistet auch die Verwendung eines vernetzten Glycerin- oder Oligoglycerinesters, vorzugsweise eines vernetzten Glycerin- oder Oligoglycerinesters, wie eingangs beschrieben, als Schmiermittel, als Verdickungsmittel oder als Viskositätsbildner für Bohrspülungen.

Gemäß einer bevorzugten Ausführungsform der erfindungsgemäßen Verwendung betrifft diese die Verwendung des vernetzten Glycerin- oder Oligoglycerinesters in Öl-basierten Bohrspülungen, wobei als Öl-basierte Bohrspülungen vorzugsweise solche Systeme verstanden werden, die zu mindestens 50 Gew.-%, vorzugsweise zu mindestens 70 Gew.-%, insbesondere zu mindestens 80 Gew.-% und am meisten bevorzugt zu mindestens 90 Gew.-%, jeweils bezogen auf die bei Raumtemperatur (21°C) flüssige Phase des Systems, auf einer mit Wasser nicht mischbaren organischen Öl-Phase basieren, wobei es sich bei dieser Öl-basierten Bohrspülung vorzugsweise um die vorstehend beschriebene Wasser-in-Öl-Emulsion handelt.

Gemäß einer anderen bevorzugten Ausführungsform der erfindungsgemäßen Verwendung betrifft diese die Verwendung des vernetzten Glycerin- oder Oligoglycerinesters in Wasser-basierten Bohrspülungen, wobei als Wasser-basierte Bohrspülungen vorzugsweise solche Systeme verstanden werden, die zu mindestens 50 Gew.-%, vorzugsweise zu mindestens 70 Gew.-%, insbesondere zu mindestens 80 Gew.-% und am meisten bevorzugt zu mindestens 90 Gew.-%, jeweils bezogen auf die bei Raumtemperatur (21°C) flüssige Phase des Systems, auf Wasser basieren, wobei es sich bei dieser Wasser-basierten Bohrspülung vorzugsweise um die vorstehend beschriebene wässrige Lösung oder um die vorstehend beschriebene Öl-in-Wasser-Emulsion handelt.

Die Erfindung wird nun anhand von Figuren und nicht limitierenden Beispielen näher erläutert.

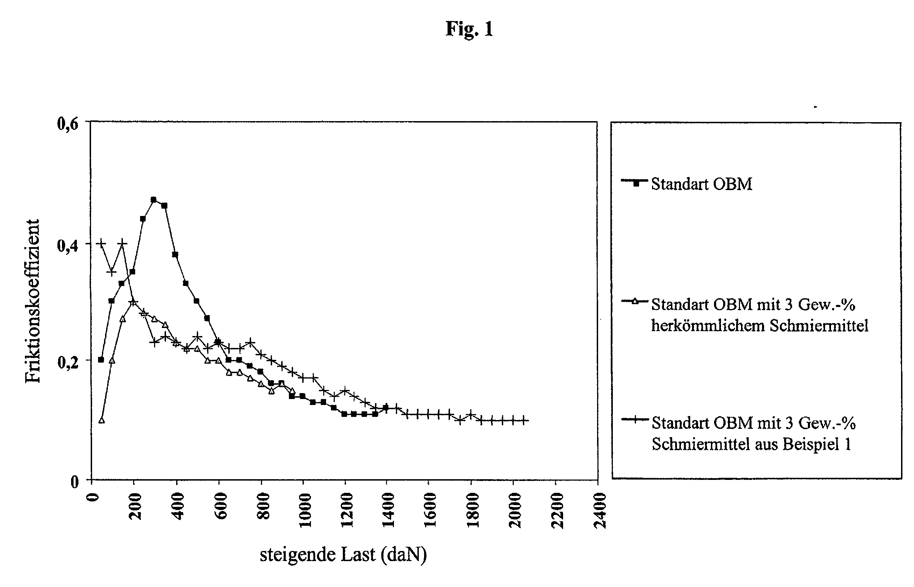

Es zeigt die Figur 1 die Schmiermittelwirkung der erfindungsgemäßen vernetzten Oligoglycerinester in einer Öl-basierten Bohrspühlung.

### BEISPIELE

### Beispiel 1: Herstellung eines erfindungsgemäßen vernetzten Oligoglycerinesters

### (Edenor TiO5/Adipinsäure-Diglycerin 3/1 [-COOH] : 4 [-OH]

837 g Ölsäure (das Produkt Edenor^{®} TiO5 von der Firma Oleochemicals, Düsseldorf, Deutschland), 73,07 g Adipinsäure und 171,2 g Diglycerin werden unter N₂-Atmosphäre auf 240°C erhitzt. Ab einer Temperatur von 195°C beginnt die Wasserabspaltung, wobei sich im Kühler eine gelartige Substanz aus Ölsäure/Glycerin/Wasser niederschlägt. Nach ca. 2 Stunden wird die Destillation beendet und es wird die Säurezahl des Produktes bestimmt. Liegt diese bei weniger als 30, so wird der Ansatz auf 220°C abgekühlt, der N₂-Anschluss geschlossen und anschließend vorsichtig ein Vakuum angelegt. Nach 2 bis 3 Stunden wird die Heizung entfernt und im Vakuum abgekühlt.

Zur Aufarbeitung des Reaktionsproduktes wird für 15 Minuten mit Tonsil gerührt, anschließend kurz ein Vakuum angelegt und vor der Filtration über eine vorgewärmte Nutsche etwas Celatom^{®} (Eagle-Picher Industries, Inc., Inkster, USA) eingerührt.

### Beispiel 2: Herstellung einer Öl-basierten Bohrspülungen

Um die Verdickungswirkung des vernetzten Oligoglycerinesters aus Beispiel 1 aufzuzeigen, wurde eine Invert-Bohrspülung auf Basis von Paraffinöl hergestellt, wobei die Spülung die folgende Zusammensetzung aufwies:

| | |
|---|---|
| Paraffinöl | 173,6 ml |
| Wasser | 69,3 ml |
| Emulgator | 6 g |
| CaCl₂ × 2 H₂O | 36 g |
| Fluid-loss-Additiv | 5 g |
| Strukturbildner | 1 g |
| Lime | 1,5 g |
| Barit | 314,0 g |

Das Öl-Wasser-Verhältnis betrug 70 : 30 Vol.-%. Das Spülungsgewicht 14 lb/gal. Als Verdicker wurden zusätzlich 4 g (Beispiel 2a) bzw. 8 g (Beispiel 2b) des im Beispiel 1 erhaltenen vernetzten Oligoglycerinesters zugesetzt. Als Vergleich (Vergleichsbeispiel) diente eine nicht-additivierte Spülung.

Die Messungen der rheologischen Daten erfolgten immer gemäß API bulletin RP 13 B-2. Die Spülungen wurden vor Alterung (before hot rolling = BHR) und nach Alterung bei 250 °F (121 °C) (after hot rolling = AHR) untersucht. Es gelten dabei die folgenden Umrechnungsfaktoren in das SI-System: 1 lbf = 4,448 m kg s; 1 lb in= 0,015 m kg; 1 gal = 3,791.

| | Vergleichsbeispiel | | Beispiel 2a | | Beispiel 2b | |
|---|---|---|---|---|---|---|
| | BHR | AHR | BHR | AHR | BHR | AHR |
| Elektrische Stabilität bei RT [V] | 390 | 526 | 380 | 430 | 410 | 394 |
| PV [cP] | 29 | 27 | 28 | 28 | 30 | 29 |
| YP [lb/100 ft²] | 6 | 9 | 13 | 13 | 17 | 16 |
| Gels 10"/10'[lb/100 ft²] | 5/5 | 5/6 | 6/7 | 7/8 | 8/8 | 8/9 |

Es wurden Yieldpoint (YP) und Gelstärke (Gels) nach 10 Sekunden und 10 Minuten gemessen, wobei die erfindungsgemäßen Spülungen (Beispiele 2a und 2b) eine vorteilhafte Verdickung zeigten, verglichen mit der nicht additivierten Spülung.

Neben der Verdickungswirkung wurde auch die Schmiermittelwirkung eines vernetzten Oligoglycerinesters, hergestellt aus Ölsäure : Adipinsäure : Diglycerin im Verhältnis 1 : 0,5 : 1 mittels des Almen-Wieland-Tests bestimmt. Dazu wurde die vorstehend beschriebene, Öl-basierte Bohrspülung einmal ohne Schmiermittel, einmal mit 3 Gew.-% eines herkömmlichen Schmiermittels und einmal mit 3 Gew.-% des vernetzen Oligoglycerinesters versetzt.

Die Ergebnisse sind der Figur 1 zu entnehmen. Aus dieser ist ersichtlich, dass die vernetzten Oligoglycerinester herkömmlichen Schmiermitteln überlegen sind.

### Beispiel 3: Herstellung einer wasser-basierten Bohrspülungen

Es wurde eine wasserbasierte Bohrspülung hergestellt, welche die folgende Zusammensetzung aufwies:

| | |
|---|---|
| Wasser | 260 g |
| gesättigte NaCl-Lösung | 260 g |
| Betonit (Aquagel^{® 1)}) | 36,9 g |
| Na₂CO₃ | 1,9g |
| NaOH | 3,7 g |
| Quick Thin | 9,2 g |
| Carbonox^{® 2)} | 5,5 g |
| PAC-L³⁾ | 0,9 g |
| Rev Dust^{® 4)} | 92,3 g |
| Barit | 329,4 g |

| | |
|---|---|
| ¹⁾ NL Baroid, Houston, USA ²⁾ Halliburton Fluid Systems, Houston, USA ³⁾ niedrigviskose Carboxymethylcellulose von Baroid Drilling Fluids, Houston, USA ⁴⁾ MilWhite Inc., Brownsville, Texas | |

Dieser Bohrspühlung wurde weiterhin 3 Gew.-% des vernetzten Oligoglycerinesters aus Beispiel 1 zugesetzt.

## Patentansprüche

1. Ein vernetzter Glycerin- oder Oligoglycerinester, welcher erhältlich ist durch Vernetzung eines nichtvernetzten Glycerin- oder Oligoglycerinesters, welcher erhältlich ist durch Umsetzung einer
(A) Säure-Phase beinhaltend eine
(a1) eine Fettsäure, oder
(a2) eine Dicarbonsäure, oder
(a3) eine Dimerfettsäure, oder
(a4) eine Oligomerfettsäure, oder
(a5) eine Hydroxyfettsäure oder
(a6) eine Mischung von mindestens zwei davon,
mit einer
(B) Alkohol-Phase beinhaltend
(b1) Monoglycerin, oder
(b2) Diglycerin, oder
(b3) Triglycerin, oder
(b4) Oligoglycerin aus mehr als drei Glycerin-Einheiten, oder
(b5) ein Alkoxylat der Glycerine (b1), (b2), (b3) oder (b4), oder
(b6) eine Mischung aus mindestens zwei davon,
unter Bildung eines Voll- oder Partialesters und Vernetzung des Voll- oder Partialesters mittels eines Vernetzers, wobei die Vernetzung während oder nach der Bildung des Voll- oder Partialesters erfolgen kann; wobei der Vernetzer eine Verbindung ist, welche mindestens zwei funktionelle Gruppen aufweist, die mit den freien OH-Gruppen des Voll- oder Partialesters unter Bildung einer kovalenten Bindung zu reagieren vermögen.

2. Der vernetzte Glycerin- oder Oligoglycerinester nach Anspruch 1, wobei die Fettsäure (a1) eine Fettsäure der allgemeinen Formel R-COOH ist, in der R für einen gesättigten oder ungesättigten, verzweigten oder linearen Alkyl- oder Alkenylrest mit 7 bis 21 C-Atomen steht.

3. Der vernetzte Glycerin- oder Oligoglycerinester nach Anspruch 2, wobei die Fettsäure (a1) Ölsäure, Tallölfettsäure oder eine Mischung dieser beiden Fettsäuren ist.

4. Der vernetzte Glycerin- oder Oligoglycerinester nach einem der vorhergehenden Ansprüche, wobei die Alkohol-Phase (B)
(b1) 5 bis 45 Gew.-% Monoglycerin,
(b2) 15 bis 45 Gew.-% Diglycerin,
(b3) 10 bis 40 Gew.-% Triglycerin, sowie
(b4) 1 bis 40 Gew.-% Oligoglycerin aus mehr als drei Glycerin-Einheiten, bezogen auf das Gesamtgewicht der Alkohol-Phase (B) enthält und wobei das Gesamtgewicht der Komponenten (b1) bis (b4) 100 Gew.-% beträgt.

5. Der vernetzte Glycerin- oder Oligoglycerinester nach Anspruch 4, wobei die Alkohol-Phase (B) mindestens 80 Gew.-%, bezogen auf das Gesamtgewicht der Alkohol-Phase (B), eines Glycerins mit 2 oder mehr Glycerin-Einheiten enthält.

6. Der vernetzte Glycerin- oder Oligoglycerinester nach einem der vorhergehenden Ansprüche, wobei der nichtvernetzte Glycerin- oder Oligoglycerinester ein Partialester ist.

7. Der vernetzte Glycerin- oder Oligoglycerinester nach Anspruch 6, wobei der Vernetzer eine Dicarbonsäure, eine Dimerfettsäure, eine Hydroxycarbonsäure oder ein Tetraalkoxysilan ist.

8. Der vernetzte Glycerin- oder Oligoglycerinester nach einem der Ansprüche 1 bis 5, wobei der nichtvernetzte Glycerin- oder Oligoglycerinesters ein Vollester und der Vernetzer eine Verbindung ist, welche mindestens zwei funktionelle Gruppen aufweist, die mit funktionellen Gruppen der zur Esterherstellung eingesetzten Säurekomponente unter Bildung einer kovalenten Bindung zu reagieren vermögen.

9. Ein Verfahren zur Herstellung eines vernetzten Glycerin- oder Oligoglycerinesters, umfassend die Verfahrensschritte
i) Bereitstellung einer Säure-Phase (A), beinhaltend eine
(a1) eine Fettsäure, oder
(a2) eine Dicarbonsäure, oder
(a3) eine Dimerfettsäure, oder
(a4) eine Oligomerfettsäure, oder
(a5) eine Hydroxyfettsäure oder
(a6) eine Mischung von mindestens zwei davon;
ii) Bereitstellung einer Alkohol-Phase (B) beinhaltend
(b1) Monoglycerin, oder
(b2) Diglycerin, oder
(b3) Triglycerin, oder
(b4) Oligoglycerin aus mehr als drei Glycerin-Einheiten, oder
(b5) ein Alkoxylat der Glycerine (b1), (b2), (b3) oder (b4), oder
(b6) eine Mischung aus mindestens zwei davon;
iii) Umsetzung der Säure-Phase (A) mit der Alkohol-Phase (B) unter Bildung eines Voll- oder Partialesters;
iv) Vernetzung des Voll- oder Partialesters mittels eines Vernetzers,
wobei die Vernetzung während oder nach der Bildung des Voll- oder Partialesters erfolgen kann und wobei der Vernetzer eine Verbindung ist, welche mindestens zwei funktionelle Gruppen aufweist, die mit den freien OH-Gruppen des Voll- oder Partialesters unter Bildung einer kovalenten Bindung zu reagieren vermögen.

10. Eine Zusammensetzung, beinhaltend als eine Komponente den vernetzten Glycerin- oder Oligoglycerinester, wie in einem der Ansprüche 1 bis 8 definiert, und mindestens eine weitere Komponente.

11. Die Zusammensetzung nach Anspruch 10, wobei die Zusammensetzung eine Wasser-in-Öl-Emulsion ist.

12. Die Zusammensetzung nach Anspruch 11, beinhaltend
I) 28,9 bis 99 Gew.-%, bezogen auf das Gesamtgewicht der Zusammensetzung, einer mit Wasser nicht mischbaren, organischen Öl-Phase,
II) 1 bis 48 Gew.-%, bezogen auf das Gesamtgewicht der Zusammensetzung, Wasser oder wässrige Phase,
III) 0,1 bis 20 Gew.-%, bezogen auf das Gesamtgewicht der Zusammensetzung, des in den Ansprüchen 1 bis 7 definierten, vernetzten Glycerin- oder Oligoglycerinesters,
IV) 0 bis 70 Gew.-%, bezogen auf das Gesamtgewicht der Zusammensetzung, mindestens eines weiteren Additivs,
wobei die Summe der Komponenten I) bis IV) 100 Gew.-% beträgt.

13. Die Zusammensetzung nach Anspruch 11 oder 12, wobei die Wasser-in-Öl-Emulsion eine Nanoemulsion oder eine Mikroemulsion ist, welches Wassertropfen oder Tropfen einer wässrigen Phase mit einer Tropfengröße in einem Bereich von 5 nm bis 1000 µm beinhaltet.

14. Die Zusammensetzung nach Anspruch 10, wobei die Zusammensetzung eine wässrige Lösung oder eine Öl-in-Wasser-Emulsion ist.

15. Die Zusammensetzung nach Anspruch 14, beinhaltend
I) 0 bis 48 Gew.-%, bezogen auf das Gesamtgewicht der Zusammensetzung, einer mit Wasser nicht mischbaren, organischen Öl-Phase,
II) 29,9 bis 99,9 Gew.-%, bezogen auf das Gesamtgewicht der Zusammensetzung, Wasser oder wässrige Phase,
III) 0,1 bis 20 Gew.-%, bezogen auf das Gesamtgewicht der Zusammensetzung, des in den Ansprüchen 1 bis 7 definierten, vernetzten Glycerin- oder Oligoglycerinesters,
IV) 0 bis 70 Gew.-%, bezogen auf das Gesamtgewicht der Zusammensetzung, mindestens eines weiteren Additivs,
wobei die Summe der Komponenten I) bis IV) 100 Gew.-% beträgt.

16. Die Zusammensetzung nach einem der Ansprüche 10 bis 15, wobei das mindestens eine Additiv ein Additiv ausgewählt aus der Gruppe bestehend aus Verdickungsmitteln, Tonerden, Mitteln gegen Flüssigkeitsverlusts, pH-Modifizierern, Viskositätsmodifizierern, Mitteln zur Filtrationskontrolle, Emulgatoren, Salzen, Benetzungsmitteln, Beschwerungsmitteln und Dispergiermitteln ist.

17. Verwendung der Zusammensetzung nach einem der Ansprüche 10 bis 16 beim Bohren von Bohrlöchern.

18. Ein Verfahren zum Herstellen von Bohrlöchern, bei dem eine Bohrspülung durch ein Bohrloch gepumpt wird, wobei als Bohrspülung eine Zusammensetzung nach einem der Ansprüche 10 bis 16 verwendet wird.

19. Verfahren nach Anspruch 18, beinhaltend die Verfahrensschritte:
(α1) das Bereitstellen einer Zusammensetzung nach einem der Ansprüche 10 bis 11;
(α2) das Bohren eines Loches in die Erde;
(α3) das Einleiten, vorzugsweise das Zirkulieren der im Verfahrensschritt (α1) bereitgestellten Zusammensetzung zumindest teilweise in das bzw. in dem Bohrloch.

20. Verfahren nach Anspruch 19, wobei das Einleiten, vorzugsweise das Zirkulieren mindestens teilweise während des Bohrens in Verfahrensschritt (α2) erfolgt.

21. Ein Verfahren zur Herstellung eines Öls oder eines Gases, beinhaltend die Verfahrensschritte
(α1) das Bereitstellen einer Zusammensetzung nach einem der Ansprüche 10 bis 16;
(α2) das Bohren eines Loches in die Erde;
(α3) das Einleiten, vorzugsweise das Zirkulieren der im Verfahrensschritt (α1) bereitgestellten Zusammensetzung zumindest teilweise in das bzw. in dem Bohrloch;
(a4) das Fördern von Öl oder Gas aus der Erde durch das im Verfahrensschritt (α2) gebohrte Loch;
(α2) gegebenenfalls das Reinigen oder Raffinieren des im Verfahrensschritt (α3) geförderten Öls oder Gases.

22. Verwendung eines vernetzten Glycerin- oder Oligoglycerinesters als Schmiermittel, als Verdickungsmittel oder als Viskositätsbildner für Bohrspülungen.

23. Verwendung nach Anspruch 22, wobei der vernetzte Glycerin- oder Oligoglycerinester ein vernetzter Glycerin- oder Oligoglycerinester, wie in einem der Ansprüche 1 bis 9 definiert, ist.

## Claims

1. Crosslinked glycerol or oligoglycerol ester which is obtainable by crosslinking a non-crosslinked glycerol or oligoglycerol ester which is obtainable by reacting
(A) an acid phase comprising
(a1) a fatty acid, or
(a2) a dicarboxylic acid, or
(a3) a dimer fatty acid, or
(a4) an oligomer fatty acid, or
(a5) a hydroxy fatty acid or
(a6) a mixture ofat least two thereof with
(B) an alcohol phase comprising
(b1) monoglycerol, or
(b2) diglycerol, or
(b3) triglycerol, or
(b4) oligoglycerol comprising more than three glycerol units, or
(b5) an alkoxylate of glycerol (b1), (b2), (b3) or (b4), or
(b6) a mixture of at least two thereof to form a full or partial ester and crosslinking the full or partial ester by means of a crosslinker, whereby the crosslinking can be effected during or after the formation of the full or partial ester; wherein the crosslinker is a compound which has at least two functional groups which are capable of reacting with the free OH groups of the full or partial ester to form a covalent bond.

2. The crosslinked glycerol or oligoglycerol ester according to Claim 1, wherein the fatty acid (a1) is a fatty acid of the general formula R-COOH in which R is a saturated or unsaturated, branched or linear alkyl or alkenyl radical having 7 to 21 carbon atoms.

3. The crosslinked glycerol or oligoglycerol ester according to Claim 2, wherein the fatty acid (a1) is oleic acid, tall oil fatty acid or a mixture of these two fatty acids.

4. The crosslinked glycerol or oligoglycerol ester according to any of the preceding claims, wherein the alcohol phase (B) contains
(b1) 5 to 45% by weight of monoglycerol,
(b2) 15 to 45% by weight of diglycerol,
(b3) 10 to 40% by weight of triglycerol, and
(b4) 1 to 40% by weight of oligoglycerol comprising more than three glycerol units,
based on the total weight of the alcohol phase (B), and wherein the total weight of components (b1) to (b4) is 100% by weight.

5. The crosslinked glycerol or oligoglycerol ester according to claim 4, wherein the alcohol phase (B) contains at least 80% by weight, based on the total weight of the alcohol phase (B), of a glycerol having 2 or more glycerol units.

6. The crosslinked glycerol or oligoglycerol ester according to any of the preceding claims, wherein the non-crosslinked glycerol or oligoglycerol ester is a partial ester.

7. The crosslinked glycerol or oligoglycerol ester according to Claim 6, wherein the crosslinker is a dicarboxylic acid, a dimer fatty acid, a hydroxycarboxylic acid or a tetraalkoxysilane.

8. The crosslinked glycerol or oligoglycerol ester according to any of Claims 1 to 5, wherein the uncrosslinked glycerol or oligoglycerol ester is a full ester and the crosslinker is a compound which has at least two functional groups which are capable of reacting with functional groups of the acid component used for ester preparation to form a covalent bond.

9. Process for preparing a crosslinked glycerol or oligoglycerol ester, comprising the process steps of
i) providing an acid phase (A) comprising
(a1) a fatty acid, or
(a2) a dicarboxylic acid, or
(a3) a dimer fatty acid, or
(a4) an oligomer fatty acid, or
(a5) a hydroxy fatty acid or
(a6) a mixture of at least two thereof;
ii) providing an alcohol phase (B) comprising
(b1) monoglycerol, or
(b2) diglycerol, or
(b3) triglycerol, or
(b4) oligoglycerol comprising more than three glycerol units, or
(b5) an alkoxylate of glycerol (b1), (b2), (b3) or (b4), or
(b6) a mixture of at least two thereof;
iii) reacting the acid phase (A) with the alcohol phase (B) to form a full or partial ester;
iv) crosslinking the full or partial ester by means of a crosslinker, wherein the crosslinking can be effected during or after the formation of the full or partial ester and wherein the crosslinker is a compound which has at least two functional groups which are capable of reacting with the free OH groups of the full or partial ester to form a covalent bond.

10. Composition comprising, as one component, the crosslinked glycerol or oligoglycerol ester as defined in any of Claims I to 8, and at least one further component.

11. The composition according to Claim 10, wherein the composition is a water-in-oil emulsion.

12. The composition according to Claim 11, comprising
I) 28.9 to 99% by weight, based on the total weight of the composition, of a water-immiscible organic oil phase,
II) 1 to 48% by weight, based on the total weight of the composition, of water or an aqueous phase,
III) 0.1 to 20% by weight, based on the total weight of the composition, of the crosslinked glycerol or oligoglycerol ester defined in Claims I to 7,
IV) 0 to 70% by weight, based on the total weight of the composition, of at least one further additive,
where the sum of components I) to IV) is 100% by weight.

13. The composition according to Claim 11 or 12, wherein the water-in-oil emulsion is a nanoemulsion or a microemulsion which comprises water droplets or droplets of an aqueous phase with a droplet size within a range from 5 nm to 1000 µm.

14. The composition according to Claim 10, wherein the composition is an aqueous solution or an oil-in-water emulsion.

15. The composition according to Claim 14, comprising
I) 0 to 48% by weight, based on the total weight of the composition, of a water-immiscible organic oil phase,
II) 29.9 to 99.9% by weight, based on the total weight of the composition, of water or an aqueous phase,
III) 0.1 to 20% by weight, based on the total weight of the composition, of the crosslinked glycerol or oligoglycerol ester defined in Claims 1 to 7,
IV) 0 to 70% by weight, based on the total weight of the composition, of at least one further additive,
where the sum of components I) to IV) is 100% by weight.

16. The composition according to any of Claims 10 to 15, wherein the at least one additive is an additive selected from the group consisting of thickeners, alumina, agents against liquid loss, pH modifiers, viscosity modifiers, agents for filtration control, emulsifiers, salts, wetting agents, weighting agents and dispersants.

17. Use of the composition according to any of Claims 10 to 16 in the drilling of boreholes.

18. Process for producing boreholes, in which a drilling fluid is pumped through a borehole, wherein the drilling fluid used is a composition according to any of Claims 10 to 16.

19. Process according to Claim 18, comprising the process steps of:
(α1) providing a composition according to any of Claims 10 to 11;
(α2) drilling a hole into the ground;
(α3) introducing, preferably circulating the composition provided in process step (α1) at least partly into/within the borehole.

20. Process according to Claim 19, wherein the introducing, preferably the circulating, is effected at least partly during the drilling in process step (α2).

21. Process for producing an oil or a gas, comprising the process steps of
(α1) providing a composition according to any of Claims 10 to 16;
(α2) drilling a hole into the ground;
(α3) introducing, preferably circulating the composition provided in process step (α1) at least partly into/within the borehole;
(α4) delivering oil or gas out of the ground through the hole drilled in process step (α2);
(α5) optionally purifying or refining of the oil or gas extracted in process step (α3).

22. Use of a crosslinked glycerol or oligoglycerol ester as a lubricant, as a thickener or as a viscosity builder for drilling fluids.

23. Use according to Claim 22, wherein the crosslinked glycerol or oligoglycerol ester is a crosslinked glycerol or oligoglycerol ester as defined in any of Claims 1 to 9.

## Revendications

1. Ester de glycérol ou d'oligoglycérol réticulé, qui peut être obtenu par réticulation d'un ester de glycérol ou d'oligoglycérol non réticulé, qui peut être obtenu par mise en réaction
(A) d'une phase acide comportant
(a1) un acide gras, ou
(a2) un acide dicarboxylique, ou
(a3) un acide gras dimère, ou
(a4) un acide gras oligomère, ou
(a5) un acide gras hydroxylé, ou
(a6) un mélange d'au moins deux de ceux-ci,
avec
(B) une phase alcool comportant
(b1) du monoglycérol, ou
(b2) du diglycérol, ou
(b3) du triglycérol, ou
(b4) un oligoglycérol composé de plus de trois unités glycérol, ou
(b5) un produit d'alcoxylation des glycérols (b1), (b2), (b3) ou (b4), ou
(b6) un mélange d'au moins deux de ceux-ci,
avec formation d'un ester partiel ou total et réticulation de l'ester partiel ou total au moyen d'un agent de réticulation, la réticulation pouvant s'effectuer pendant ou après la formation de l'ester partiel ou total; l'agent de réticulation étant un composé qui comporte au moins deux groupes fonctionnels qui sont aptes à réagir avec les groupes OH libres de l'ester partiel ou total, avec formation d'une liaison covalente.

2. Ester de glycérol ou d'oligoglycérol réticulé selon la revendication 1, dans lequel l'acide gras (a1) est un acide gras de formule générale R-COOH, dans lequel R représente un radical alkyle ou alcényle linéaire ou ramifié, saturé ou insaturé, ayant de 7 à 21 atomes de carbone.

3. Ester de glycérol ou d'oligoglycérol réticulé selon la revendication 2, dans lequel l'acide gras (a1) est l'acide oléique, l'acide gras de tallöl ou un mélange de ces deux acides gras.

4. Ester de glycérol ou d'oligoglycérol réticulé selon l'une quelconque des revendications précédentes, dans lequel la phase alcool (B) contient
(b1) 5 à 45 % en poids de monoglycérol,
(b2) 15 à 45 % en poids de diglycérol,
(b3) 10 à 40 % en poids de triglycérol, ainsi que
(b4) 1 à 40 % en poids d'oligoglycérol composé de plus de trois unités glycérol, par rapport au poids total de la phase alcool (B) et dans lequel le poids total des composants (b1) à (b4) est égal à 100 % en poids.

5. Ester de glycérol ou d'oligoglycérol réticulé selon la revendication 4, dans lequel la phase alcool (B) contient au moins 80 % en poids, par rapport au poids total de la phase alcool (B), d'un glycérol comportant 2 ou plus de 2 unités glycérol.

6. Ester de glycérol ou d'oligoglycérol réticulé selon l'une quelconque des revendications précédentes, dans lequel l'ester de glycérol ou d'oligoglycérol non réticulé est un ester partiel.

7. Ester de glycérol ou d'oligoglycérol réticulé selon la revendication 6, dans lequel l'agent de réticulation est un acide dicarboxylique, un acide gras dimère, un acide gras hydroxylé ou un tétraalcoxysilane.

8. Ester de glycérol ou d'oligoglycérol réticulé selon l'une quelconque des revendications 1 à 5, dans lequel l'ester de glycérol ou d'oligoglycérol non réticulé est un ester total et l'agent de réticulation est un composé qui comporte au moins deux groupes fonctionnels qui sont aptes à réagir avec des groupes fonctionnels du composant acide utilisé pour la préparation de l'ester, avec formation d'une liaison covalente.

9. Procédé pour la préparation d'un ester de glycérol ou d'oligoglycérol réticulé, comprenant les étapes de processus
i) mettre en place d'une phase acide (A) comportant
(a1) un acide gras, ou
(a2) un acide dicarboxylique, ou
(a3) un acide gras dimère, ou
(a4) un acide gras oligomère, ou
(a5) un acide gras hydroxylé, ou
(a6) un mélange d'au moins deux de ceux-ci ;
ii) mettre en place d'une phase alcool (B) comportant
(b1) du monoglycérol, ou
(b2) du diglycérol, ou
(b3) du triglycérol, ou
(b4) un oligoglycérol composé de plus de trois unités glycérol, ou
(b5) un produit d'alcoxylation des glycérols (b1), (b2), (b3) ou (b4), ou
(b6) un mélange d'au moins deux de ceux-ci ;
iii) mise en réaction de la phase acide (A) avec la phase alcool (B), avec formation d'un ester partiel ou total ;
iv) réticulation de l'ester partiel ou total au moyen d'un agent de réticulation, la réticulation pouvant d'effectuer pendant ou après la formation de l'ester partiel ou total et l'agent de réticulation étant un composé qui comporte au moins deux groupes fonctionnels qui sont aptes à réagir avec les groupes OH libres de l'ester partiel ou total, avec formation d'une liaison covalente.

10. Composition comportant en tant qu'un composant l'ester de glycérol ou d'oligoglycérol réticulé, tel que défini dans l'une quelconque des revendications 1 à 8, et au moins un autre composant.

11. Composition selon la revendication 10, la composition étant une émulsion eau-dans-huile.

12. Composition selon la revendication 11, comportant
I) 28,9 à 99 % en poids, par rapport au poids total de la composition, d'une phase huileuse organique non miscible à l'eau,
II) 1 à 48 % en poids, par rapport au poids total de la composition, d'eau ou de phase aqueuse,
III) 0,1 à 20 % en poids, par rapport au poids total de la composition, de l'ester de glycérol ou d'oligoglycérol réticulé, défini dans les revendications 1 à 7,
IV) 0 à 70 % en poids, par rapport au poids total de la composition, d'au moins un autre additif,
la somme des composants I) à IV) étant égale à 100 % en poids.

13. Composition selon la revendication 11 ou 12, dans laquelle l'émulsion eau-dans-huile est une nanoémulsion ou une microémulsion, qui comporte des gouttes d'eau ou des gouttes d'une phase aqueuse ayant une taille de goutte dans une plage de 5 nm à 1 000 µm.

14. Composition selon la revendication 10, la composition étant une solution aqueuse ou une émulsion huile-dans-eau.

15. Composition selon la revendication 14, comportant
I) 0 à 48 % en poids, par rapport au poids total de la composition, d'une phase huileuse organique non miscible à l'eau,
II) 29,9 à 99,9 % en poids, par rapport au poids total de la composition, d'eau ou de phase aqueuse,
III) 0,1 à 20 % en poids, par rapport au poids total de la composition, de l'ester de glycérol ou d'oligoglycérol réticulé, défini dans les revendications 1 à 7,
IV) 0 à 70 % en poids, par rapport au poids total de la composition, d'au moins un autre additif,
la somme des composants I) à IV) étant égale à 100 % en poids.

16. Composition selon l'une quelconque des revendications 10 à 15, dans laquelle ledit au moins un additif est un additif choisi dans le groupe consistant en épaississants, alumines, agents contre la perte de liquide, modificateurs de pH, modificateurs de viscosité, agents pour la régulation de la filtration, émulsifiants, sels, agents mouillants, agents de lestage et dispersants.

17. Utilisation de la composition selon l'une quelconque des revendications 10 à 16 dans le forage de puits de forage.

18. Procédé pour la création de puits de forage, dans lequel on introduit par pompage un fluide de forage à travers un trou de forage, en utilisant comme fluide de forage une composition selon l'une quelconque des revendications 10 à 16.

19. Procédé selon la revendication 18, comprenant les étapes de processus:
(α1) la préparation d'une composition selon la revendication 10 ou 11 ;
(α2) le forage d'un trou dans le sol ;
(α3) l'introduction, de préférence la mise en circulation de la composition préparée dans l'étape (α1) du procédé, au moins en partie dans le trou de forage.

20. Procédé selon la revendication 19, dans lequel l'introduction, de préférence la circulation, s'effectue au moins en partie pendant le forage dans l'étape (α2) du procédé.

21. Procédé pour la production d'une huile ou d'un gaz, comportant les étapes de processus
(α1) la préparation d'une composition selon l'une quelconque des revendications 10 à 16;
(α2) le forage d'un trou dans le sol ;
(α3) l'introduction, de préférence la mise en circulation de la composition préparée dans l'étape (α1) du procédé, au moins en partie dans le trou de forage.
(α4) l'extraction d'huile ou de gaz du sol par le trou foré dans l'étape (α2) du procédé ;
(α5) éventuellement la purification ou le raffinage de l'huile ou du gaz extrait(e) dans l'étape (α3) du procédé.

22. Utilisation d'un ester de glycérol ou d'oligoglycérol réticulé, en tant que lubrifiant, en tant qu'épaississant ou en tant que régulateur de la viscosité pour fluides de forage.

23. Utilisation selon la revendication 22, dans laquelle l'ester de glycérol ou d'oligoglycérol réticulé est un ester de glycérol ou d'oligoglycérol réticulé tel que défini dans l'une quelconque des revendications 1 à 9.
